# EUROPEAN PATENT APPLICATION

(11) **EP 1 675 158 A2**
(43) Date of publication of application: **28.06.2006**
(21) Application number: 05027569.2
(22) Date of filing: 16.12.2005
(51) Int. Cl.: H01J 61/30, H01J 61/16

(54) **Discharge gas, surface light source device and backlight unit having the same**

(30) Priority: 23.12.2004 KR 2004111241
(71) Applicant: Samsung Corning Co., Ltd, Suwon-si, Gyeonggi-do 442-732 (KR)
(72) Inventor: Ko, Jae-Hyeon, Yeongtong-gu Suwon-si Gyeonggi-do (KR); Kim, Hyun-Sook, Seoul (KR); Cho, Seog-Hyun, Gwangjin-gu Seoul (KR); Heon, Min, Suwon-si Gyeonggi-do (KR); Jung, Kyeong-Taek, Gweonseon-gu Suwon-si Gyeonggi-do (KR)
(74) Representative: Weitzel, Wolfgang

(57) **Abstract**

A discharge gas is injected into a plurality of discharge spaces of a surface light source device that has an aspect ratio of about 0.07 to about 0.85. The discharge gas has a pressure of about 10torr to about 120torr with respect to a temperature for lighting the discharge gas. The discharge gas includes an inert gas having a neon gas and an argon gas. The argon gas has an amount of about 0% to about 60% by volume with respect to the neon gas. The discharge gas may function as to optimize a light-emitting efficiency of the surface light source device so that the surface light source device may have improved luminance.

## Description

### BACKGROUND OF THE INVENTION

### 1. Field of the Invention

The present invention relates to a discharge gas, a surface light source device and a backlight unit having the device. More particularly, the present invention relates to a discharge gas employed in a surface light source device that has discharge spaces having a stripe shape and is used as a light-providing part in a liquid crystal display (LCD) device, a surface light source device using the discharge gas, and a backlight unit having the surface light source device.

### 2. Description of the Related Art

Generally, a liquid crystal (LC) has electrical and optical characteristics. In detail, when electric fields applied to the LC are changed, an arrangement of the LC molecules is also changed. As a result, an optical transmittance is changed.

A liquid crystal display (LCD) apparatus uses the above-explained characteristics of the LC to display an image. The LCD apparatus has many merits, for example, such as a small volume, a lightweight, etc. Therefore, the LCD apparatus is used in various fields, for example, such as a notebook computer, a mobile phone, television set, etc.

The LCD apparatus includes a liquid crystal controlling part and a light providing part. The liquid crystal controlling part controls the LC. The light providing part provides the liquid crystal controlling part with a light.

The liquid crystal controlling part includes a pixel electrode formed on a first substrate, a common electrode formed on a second substrate and a liquid crystal layer interposed between the pixel electrode and the common electrode. A number of the pixel electrode is determined in accordance with resolution, and a number of the common electrode is one. Each of the pixel electrodes is electrically connected to a thin film transistor (TFT), so that a pixel voltage is applied to the pixel electrode through the TFT. A reference voltage is applied to the common electrode. Both of the pixel electrode and the common electrode include an electrically conductive and optically transparent material.

The light providing part provides the liquid crystal controlling part with a light. The light generated from the light providing part passes in sequence through the pixel electrode, the liquid crystal layer and the common electrode. Therefore, luminance and uniformity of the luminance have great influence on a display quality of the LCD apparatus.

A conventional light providing part employs a cold cathode fluorescent lamp (CCFL) or a light emitting diode (LED). The CCFL has a long cylindrical shape, and the LED has a small dot shape.

For easily lighting mercury vapor and suppressing an evaporation of a cathode material, an argon gas is injected into the CCFL. The CCFL has high luminance and long lifespan, and generates a small amount of h eat compared to those of a glow lamp. A conventional mercury discharge lamp is disclosed in U.S. Patent No. 6,683,407. The conventional mercury discharge lamp includes a mercury gas, an argon gas and a light-reflecting layer. Further, the conventional mercury discharge lamp has an optimal gas pressure of about 2.9torr to about 5torr. However, the CCFL has low uniformity of luminance.

Therefore, in order to enhance the uniformity of luminance, the light providing part requires optical members such as a light guide plate (LGP), a diffusion member, a prism sheet, etc. Therefore, both of volume a nd weight of the LCD apparatus increase.

In order to solve above-mentioned problem, a surface light source device has been developed. The surface light source device may be classified into a partition wall-separated type device and a partition-integrated type device.

A conventional partition wall-separated type surface light source device includes first and second substrates spaced apart from each other, and a plurality of partition walls interposed between the first and second substrates. The partition walls are arranged substantially in parallel with each other to define a plurality of discharge spaces. A sealing member is interposed between the first and second substrates to isolate the discharge spaces from the exterior. The sealing member is attached to the first and second substrates via a sealing frit. Discharge gas is injected into the discharge spaces. Electrodes for applying a voltage to the discharge gas are provided as either exterior surface electrodes on an edge portion of the first and second substrates or internal metal electrodes located at each end of the discharge spaces.

Recently, to improve light-emitting efficiency (Lm/W) of the surface light source device, the discharge spaces have a reduced cross sectional area and an enlarged discharge length. For example, a surface light source device using mercury has the highest light-emitting efficiency up to now.

The mercury and a discharge gas including an inert gas for exciting the mercury are used for the surface light source device having the highest light-emitting efficiency. In the surface light source device using the mercury, when a molecule in the inert gas is in a metastable state by electrons to ionize a mercury molecule, the ionization of the mercury molecule is accelerated. This manner is referred to as a Penning Effect. To properly use the Penning Effect, a mixing ratio of the inert gas with respect to the discharge gas is a very important factor.

An example of another factor includes a pressure of the inert gas injected into the surface light source device. The lower the pressure of the inert gas is, the longer a mean free path of the electrons and the larger the ionic loss in plasma. The higher the pressure of the inert gas is, the shorter a mean free path of the electrons and the larger the elastic scattering loss in plasma. From another aspect, when the inert gas has a too low pressure, the electrons and the ions in the plasma diffuse to an inner wall of the discharge spaces very fast so that an ambipolar diffusion loss of the plasma is remarkably increased and a temperature of the electrons is unnecessarily increased. As a result, energy of the plasma should be optimized so that a large amount of a ultra-violet ray is generated in the discharge space, thereby increasing luminance of the surface light source device.

To improve the light-emitting efficiency of the surface light source device, it is required to optimally determine a pressure of the discharge gas and a mixing ratio of the discharge gas in accordance with the discharge space, particularly a diameter of the discharge space.

### SUMMARY OF THE INVENTION

The present invention provides a discharge gas having a pressure and a composition ratio that are capable of improving light-emitting efficiency and lifespan of a surface light source device having a plurality of discharge spaces.

The present invention also provides a surface light source device having improved light-emitting efficiency.

The present invention still also provides a backlight unit having the above-mentioned surface light source device as a light source.

A discharge gas in accordance with one aspect of the present invention is injected into a plurality of discharge spaces of a surface light source device that has an aspect ratio of about 0.07 to about 0.85. The aspect ratio is defined by the channel height divided by the channel width of the channel cross section. The discharge gas has a pressure of about 10torr to about 120torr with respect to a temperature for lighting the discharge gas. The discharge gas includes an inert gas having about 40% to about 100% by weight of a neon gas and about 0% to about 60% by weight of an argon gas.

A surface light source device in accordance with another aspect of the present invention includes a first substrate and a second substrate. The second substrate is integrally formed with partition wall portions that make contact with the first substrate to form a plurality of discharge spaces. An electrode applies a voltage to a discharge gas injected into the discharge spaces. The discharge gas includes mercury and an inert g as. The discharge g as has a pressure of about 10torr to about 120torr with respect to a temperature for lighting the discharge gas. The inert gas includes about 40% to about 100% by weight of a neon gas and about 0% to about 60% by weight of an argon gas.

A backlight unit in accordance with still another aspect of the present invention includes a surface light source device, a case for receiving the surface light source device, an optical sheet interposed between the surface light source device and the case, and an inverter for applying a discharge voltage to the surface light source device. The surface light source device includes a first substrate and a second substrate. The second substrate is integrally formed with partition wall portions that make contact with the first substrate to form a plurality of discharge spaces. An electrode applies a voltage to a discharge gas injected into the discharge spaces. The discharge gas includes a mercury gas and an inert gas. The discharge gas has a pressure of a bout 10torr to a bout 1 20torr with respect to a temperature for lighting the discharge gas. The inert gas includes a bout 40% to about 100% by weight of a neon gas and about 0% to about 60% by weight of an argon gas.

According to the present invention, the discharge gas has a pressure of about 10torr to about 120torr with respect to the temperature for lighting the discharge gas. Further, the inert gas includes about 40% to about 100% by weight of a neon gas and about 0% to about 60% by weight of an argon gas. Thus, plasma may be optimally generated in the discharge spaces so that the surface light source device may have improved light-emitting efficiency.

### BRIEF DESCRIPTION OF THE DRAWINGS

The above and other features and advantages of the present invention will become more apparent by describing in detailed exemplary embodiments thereof with reference to the accompanying drawings, in which:
FIG. 1 is a cross sectional view illustrating a surface light source device in accordance with a first example embodiment of the present invention;
FIG. 2 is a cross sectional view illustrating a surface light source device in accordance with a second example embodiment of the present invention;
FIG. 3 is a cross sectional view illustrating a surface light source device in accordance with a third example embodiment of the present invention; and
FIG. 4 is an exploded perspective view illustrating a backlight unit in accordance with a fourth example embodiment of the present invention.

### DESCRIPTION OF EMBODIMENTS

The present invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of elements and regions may be exaggerated for clarity.

It will be understood that when an element or layer is referred to as being "on", "connected to" or "coupled to" another element, it can be directly on, connected or coupled to the other element or layer or intervening elements may be present. In contrast, when an element is referred to as being "directly on," "directly connected to" or "directly coupled to" another element, there are no intervening elements present. Like numbers refer to like elements throughout. As used herein, the term "and/or" includes any and all combinations of one or more of the associated listed items.

It will be understood that, although the terms first, second, etc. may be used herein to describe various elements, these elements should not be limited by these terms. These terms are only used to distinguish one element from another element. Thus, a first element discussed below could be termed a second element without departing from the teachings of the present invention.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

### Discharge gas

A discharge gas injected into a plurality of discharge spaces of a surface light source device includes an inert gas for ionizing mercury. Here, the discharge gas in the discharge spaces has a pressure of about 10torr to about 120torr with respect to a temperature for lighting the discharge gas. Examples of the inert gas include a neon gas, an argon gas, etc. These can be used alone or in a combination thereof.

Here, the temperature for lighting the discharge gas to drive the surface light source device may be divided into a low temperature for lighting the discharge gas and a normal temperature for lighting the discharge gas. The low temperature for lighting the discharge gas is about 0°C and the normal temperature for lighting the discharge gas is about 25°C.

The inert gas is injected into the discharge spaces having an aspect ratio of about 0.07 to about 0.85. Further, the discharge spaces into which the discharge gas is injected have a pressure of about 10torr to about 120torr. Alternatively, the pressure of the discharge spaces may vary in accordance with the temperature for lighting the discharge gas and a size of the discharge spaces.

Particularly, the surface light source device includes the discharge spaces having an aspect ratio of about 0.07 to about 0.85. That is, the discharge spaces have a width of about 6mm to about 14mm and a height of about 1 mm to about 5mm. When the temperature for lighting the discharge gas in the discharge spaces is about 25°C, the discharge gas in the discharge spaces has a pressure of about 10torr to about 120torr, preferably about 20torr to about 80torr. Further, the discharge gas includes the inert gas having the neon gas and the argon gas. The argon gas has an amount of about 0% to about 60%, preferably about 3% to about 60% by weight with respect to the neon gas. That is, a mixing ratio by weight between the neon gas and the argon gas is about 100: 0 to about 40: 60, preferably about 97: 3 to about 40: 60.

In the surface light source device including the discharge space having an aspect ratio of about 0.07 to about 0.85, when the temperature for lighting the discharge gas in the discharge spaces is about 0°C, the discharge gas in the discharge spaces has a pressure of about 10torr to about 120torr, preferably about 10torr to about 40torr. Further, the discharge gas includes the inert gas having the neon gas and the argon gas. The argon gas has an amount of about 0% to about 60%, preferably about 3% to about 40% by weight with respect to the neon gas. That is, a mixing ratio by weight between the neon gas and the argon gas is about 100: 0 to about 60: 40, preferably about 97: 3 to about 60: 40.

According to the present embodiment, the discharge gas having the above-mentioned pressure and mixing ratio between the neon gas and the argon gas may function as to optimize a light-emitting efficiency of the surface light source device. As a result, the surface light source device may have improved luminance.

### Embodiment 1

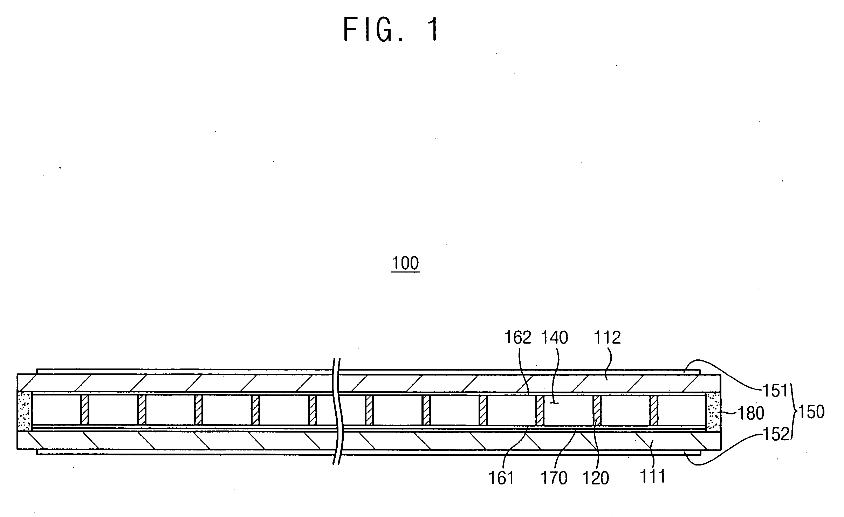

FIG. 1 is a cross sectional view illustrating a surface light source device in accordance with a first example embodiment of the present invention.

Referring to FIG. 1, a surface light source device 100 in accordance with the present embodiment includes a light source body having an inner space into which a discharge gas is injected, and an electrode 150 for applying a voltage to the discharge gas.

The surface light source device 100 is a partition wall separation type. Thus, the light source body includes a first substrate 111 and a second substrate 112 positioned over the first substrate 111. A sealing member 180 is interposed between edge portions of the first and second substrates 111 and 112 to form the inner space. Partition walls 120 are arranged in the inner space to divide the inner space into a plurality of discharge spaces 140 having a rectangular parallelepiped shape. The partition walls 120 are arranged along a first direction in parallel with each other. Each of the partition walls 120 includes a lower face making contact with the first substrate 111, an upper face making contact with the second substrate 112, and both ends making contact with the sealing member 180. Thus, the discharge spaces 140 are isolated from each other.

In the present embodiment, each of the discharge spaces 140 has a width of about 6mm to about 14mm, preferably about 8mm to about 12mm, more preferably 8mm, a nd a h eight of about 1 mm to a bout 5mm, preferably about 2mm to about 4mm, more preferably about 4mm. That is, the discharge spaces have an aspect ratio of about 0.07 to about 0.85.

The discharge gas injected into the discharge spaces 140 includes a mercury gas, a neon gas and an argon gas. The argon gas has an amount of about 0% to about 60%, preferably about 3% to about 40% by weight with respect to the total weight of the neon gas. That is, a mixing ratio by weight between the neon gas and the argon gas is about 100: 0 to about 40: 60, preferably about 97: 3 to about 40: 60.

Here, the discharge gas in the discharge spaces 140 has a pressure of about 10torr to about 120torr. When a temperature for lighting the discharge gas in the discharge spaces 140 is about 25°C, the discharge gas in the discharge spaces 140 has a pressure of about 20torr to about 80torr. Further, when a temperature for lighting the discharge gas in the discharge spaces 140 is about 0°C, the discharge gas in the discharge spaces 140 has a pressure of about 10torr to about 40torr. That is, the pressure of the discharge gas in the discharge spaces 140 may vary in accordance with the temperature for lighting the discharge gas. In the present embodiment, the discharge gas has a pressure of about 30torr. Further, the mercury gas in the discharge gas has a weight of about 60mg. Furthermore, a mixing ratio by weight between the neon gas and the argon gas is about 80: 20.

The first and second substrates 111 and 112 include a glass that is capable of transmitting a visible light therethrough and blocking an ultraviolet ray. The second substrate corresponds to a light-exiting face through which a light generated in the inner space exits.

The electrode 150 is arranged on both ends of the first and second substrates 111 and 112 in a second direction substantially perpendicular to the first direction. The electrode 150 includes an upper electrode 151 and a lower electrode 152. Examples of the electrode 150 are a conductive tape, a conductive paste, etc.

Additionally, a light-reflecting layer 170 is formed on the first substrate 111. The light-reflecting layer 170 reflects a light, which orients toward the first substrate 111, toward the second substrate 112. A first fluorescent layer 161 is formed on the light-reflecting layer 170. A second fluorescent layer 172 is formed beneath the second substrate 112.

According to the present embodiment, when a current is applied to the surface light source device 100 having the above-mentioned discharge spaces 140 and discharge gas, plasma may be optimally generated in the discharge spaces 140 so that the surface light source device 100 may have improved light-emitting efficiency.

### Embodiment 2

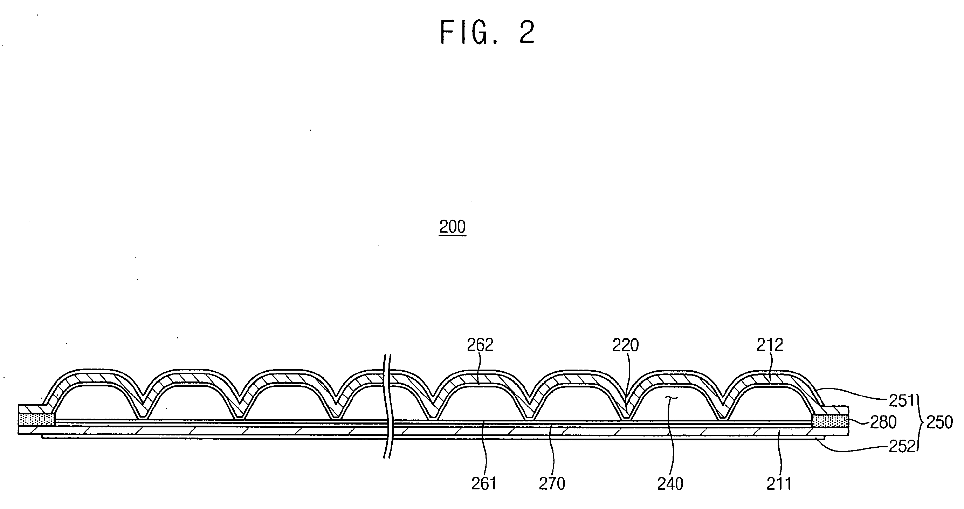

FIG. 2 is a cross sectional view illustrating a surface light source device in accordance with a second example embodiment of the present invention.

Referring to FIG. 2, a surface light source device 200 in accordance with the present embodiment includes a light source body having an inner space into which a discharge gas is injected, and an electrode 250 for applying a voltage to the discharge gas.

The surface light source device 200 is a partition wall integration type. Thus, the light source body includes a first substrate 211 and a second substrate 212 positioned over the first substrate 211 and integrally formed with partition wall portions 220. The partition wall portions 220 are arranged in a first direction. The partition wall portions 220 make contact with the first substrate 211 to form a plurality of arched discharge spaces 240. Further, outermost partition walls 220 are attached to the first substrate 211 using a sealing frit 280. The partition wall portions 220 define the discharge spaces 240 isolated from each other. Here, each of the partition wall portions 220 may have a width of about 0,5mm to about 1.5mm.

Each of the arched discharge spaces 240 has a width of about 6mm to about 14mm, preferably about 8mm to about 12mm, more preferably 10mm, and a height of about 1 mm to about 5mm, preferably about 2mm to about 4mm, more preferably about 2.9mm.

The discharge gas injected into the discharge spaces 240 includes a mercury gas, a neon gas and an argon gas. The argon gas has an amount of about 0% to about 60%, preferably about 3% to about 40% by weight with respect to the total weight of the neon gas. That is, a mixing ratio by weight between the neon gas and the argon gas is about 100: 0 to about 40: 60, preferably about 97: 3 to about 40: 60.

Here, the discharge gas in the discharge spaces 240 has a pressure of about 10torr to about 120torr. When a temperature for lighting the discharge gas in the discharge spaces 240 is about 25°C, the discharge gas in the discharge spaces has a pressure of about 20torr to about 80torr. Further, when a temperature for lighting the discharge gas in the discharge spaces 240 is about 0°C, the discharge gas in the discharge spaces has a pressure of about 10torr to about 40torr. That is, the pressure of the discharge gas in the discharge spaces 240 may vary in accordance with the temperature for lighting the discharge gas. In the present embodiment, the discharge gas has a pressure of about 30torr. Further, the mercury gas in the discharge gas has a weight of about 60mg. Furthermore, a mixing ratio by weight between the neon gas and the argon gas is about 80: 20.

The electrode 250 is arranged on both ends of the first and second substrates 211 and 212 in a second direction substantially perpendicular to the first direction. The electrode 250 includes an upper electrode 251 and a lower electrode 252.

Additionally, a light-reflecting layer 270 is formed on the first substrate 211. The light-reflecting layer 270 reflects a light, which orients toward the first substrate 211, toward the second substrate 212. A first fluorescent layer 261 is formed on the light-reflecting layer 270. A second fluorescent layer 272 is formed beneath the second substrate 212.

According to the present embodiment, when a current is applied to the surface light source device 200 having the above-mentioned discharge spaces 240 and discharge gas, plasma may be optimally generated in the discharge spaces 240 so that the surface light source device 200 may have improved light-emitting efficiency.

### Embodiment 3

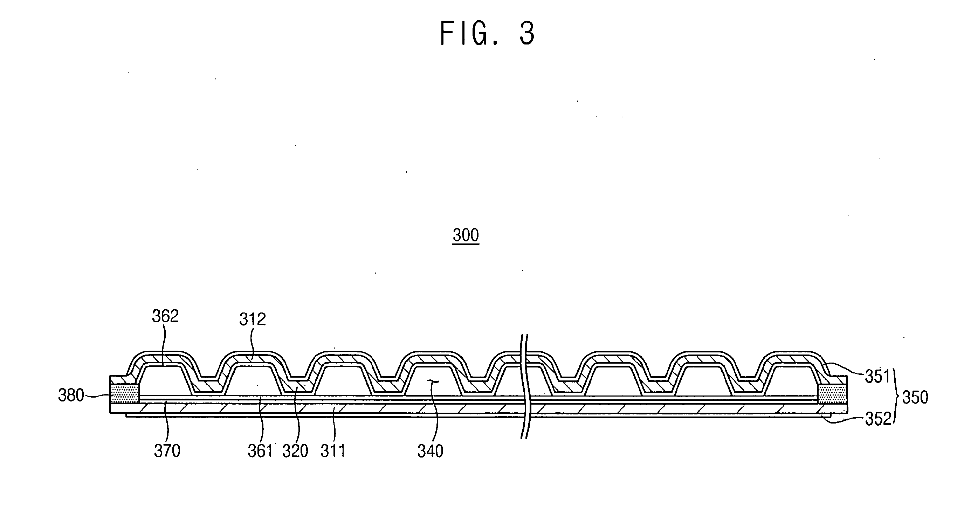

FIG. 3 is a cross sectional view illustrating a surface light source device in accordance with a third example embodiment of the present invention.

Referring to FIG. 3, a surface light source device 300 in accordance with the present embodiment includes a light source body having an inner space into which a discharge gas is injected, and an electrode 350 for applying a voltage to the discharge gas.

The surface light source device 300 is a partition wall integration type. Thus, the light source body includes a first substrate 311 and a second substrate 312 positioned over the first substrate 311 and integrally formed with partition wall portions 320. The partition wall portions 320 are arranged in a first direction. The partition wall portions 320 make contact with the first substrate 211 to form a plurality of trapezoid discharge spaces 340. Further, outermost partition walls 320 are attached to the first substrate 311 using a sealing frit 380. The partition wall portions 320 define the discharge spaces 340 isolated from each other. Particularly, to prevent a current from being drifted between adjacent discharge spaces 340, each of the partition wall portions 320 may have a width of about 2mm to a bout 5mm, preferably about 4mm.

Each of the trapezoid discharge spaces 340 has a width of about 6mm to about 14mm, preferably about 8mm to about 12mm, more preferably 9mm, and a height of about 1 mm to about 5mm, preferably about 2mm to about 4mm, more preferably about 3.5mm.

The discharge gas injected into the discharge spaces 340 includes a mercury gas, a neon gas and an argon gas. The argon gas has an amount of about 0% to about 60%, preferably about 3% to about 40% by weight with respect to the neon gas. That is, a mixing ratio by weight between the neon gas and the argon gas is about 100: 0 to about 40: 60, preferably about 97: 3 to about 40: 60.

Here, the discharge gas in the discharge spaces 340 has a pressure of about 10torr to about 120torr. When a temperature for lighting the discharge gas in the discharge spaces 340 is about 25°C, the discharge gas in the discharge spaces has a pressure of about 20torr to about 80torr. Further, when a temperature for lighting the discharge gas in the discharge spaces 340 is about 0°C, the discharge gas in the discharge spaces has a pressure of about 10torr to about 40torr. That is, the pressure of the discharge gas in the discharge spaces 340 may vary in accordance with the temperature for lighting the discharge gas. In the present embodiment, the discharge gas has a pressure of about 30torr. Further, the mercury gas in the discharge gas has a weight of about 60mg. Furthermore, a mixing ratio by weight between the neon gas and the argon gas is about 80: 20.

The electrode 350 is arranged on both ends of the first and second substrates 311 and 312 in a second direction substantially perpendicular to the first direction. The electrode 350 includes an upper electrode 351 and a lower electrode 352.

Additionally, a light-reflecting layer 370 is formed on the first substrate 311. The light-reflecting layer 370 reflects a light, which orients toward the first substrate 311, toward the second substrate 312. A first fluorescent layer 361 is formed on the light-reflecting layer 370. A second fluorescent layer 372 is formed beneath the second substrate 312.

According to the present embodiment, when a current is applied to the surface light source device 300 having the above-mentioned discharge spaces 340 and discharge gas, plasma may be optimally generated in the discharge spaces 340 so that the surface light source device 300 may have improved light-emitting efficiency.

Further, the present invention may be employed in surface light source devices having diverse discharge spaces, which are formed by building partition walls such as glass tubes or by etching a glass substrate, as well as the surface light source device 300 having the above-mentioned discharge spaces 340.

### Embodiment 4

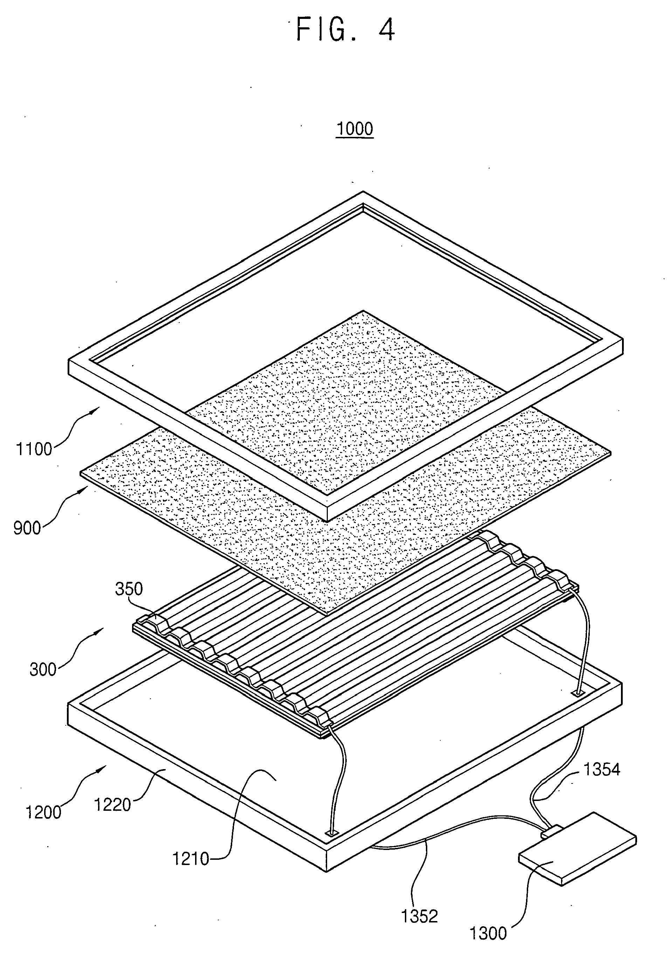

FIG. 4 is an exploded perspective view illustrating a backlight unit in accordance with a fourth example embodiment of the present invention.

Referring to FIG. 4, a backlight unit 1000 in accordance with the present embodiment includes the surface light source device 300 in FIG. 3, upper and lower cases 1100 and 1200, an optical sheet 900 and an inverter 1300.

The surface light source device 300 is illustrated in detail with reference to FIG. 3. Thus, any further illustrations of the surface light source device 300 are omitted. Further, other surface light source devices in accordance with Embodiments 1 and 2 may be employed in the backlight unit 1000.

The lower case 1200 includes a bottom face 1210 for receiving the surface light source device 300, and a side face 1220 extending from an edge of the bottom face 1210. Thus, a receiving space for receiving the surface light source device 300 is formed in the lower case 1200.

The inverter 1300 is arranged under the lower case 1200. The inverter 1300 generates a discharge voltage for driving the surface light source device 300. The discharge voltage generated from the inverter 1300 is applied to the electrode 350 of the surface light source device 300 through first and second electrical cables 1352 and 1354.

The optical sheet 900 includes a diffusion sheet (not shown) for uniformly diffusing a light irradiated from the surface light source device 300, and a prism sheet (not shown) for providing straightforwardness to the light diffused by the diffusion sheet.

The upper case 1100 is combined with the lower case 1220 to support the surface light source device 300 and the optical sheet 900. The upper case 1100 prevents the surface light source device 300 from being separated from the lower case 1200.

Additionally, an LCD panel (not shown) for displaying an image may be arranged over the upper case 1100.

Hereinafter, the present invention is more illustrated in detail by following tests. Here, the tests are carried out to exemplarily explain the present invention. Thus, the present invention is not restricted within the tests.

### First testing with respect to the surface light source device in FIG. 1

A discharge gas including a neon gas and an argon gas was injected into the discharge spaces 140 of the surface light source device 100 in FIG. 1. Here, a mixing ratio by weight between the neon gas and the argon gas was 80: 20. Pulse width modulation (PWM) dimming of the surface light source device 100 in accordance with a temperature for lighting the discharge gas was measured with pressure of the discharge gas being changed. Further, whether the surface light source device 100 was turned-on or off under the above-mentioned conditions was tested. The results are shown in the following Table 1.

**Table 1**

| Pressure (torr) | Mixing ratio between Ne: Ar | Turn-on at a temperature of 25°C | Turn-on at a temperature of 0°C | PWM dimming |
|---|---|---|---|---|
| 20 | 80: 20 | ○ | ○ | 100-20% |
| 30 | 80: 20 | ○ | ○ | 100-20% |
| 40 | 80: 20 | ○ | △ | 100-40% |
| 50 | 80: 20 | ○ | X | 100-60% |
| 60 | 80: 20 | ○ | X | 100-60% |
| 70 | 80: 20 | ○ | X | 100-60% |
| 80 | 80: 20 | ○ | X | 100-80% |

In Table 1, the PWM dimming, which is capable of accurately and naturally changing color and brightness, corresponds to a value that represents whether the surface light source device 100 is turned-on or off in accordance with an amount of a current applied to the surface light source device 100. That is, 100% of the PWM dimming indicates that the surface light source device 100 is turned-on when applying 100% of a current to the surface light source device 100. 20% of the PWM dimming indicates that the surface light source device 100 is turned-on when applying 20% of a current to the surface light source device 100. Thus, when the mixing ratio by weight between the neon gas and the argon gas is 80: 20 and the pressure of the discharge gas is 20torr to 40torr, efficiency for lighting the discharge gas and the PWM dimming have been most improved.

### Second testing with respect to the surface light source device in FIG. 1

A discharge gas including a neon gas and an argon gas was injected into the discharge spaces 140 of the surface light source device 100 in FIG. 1. Here, the discharge gas had a pressure of 30torr. Pulse width modulation (PWM) dimming of the surface light source device 100 in accordance with a temperature for lighting the discharge gas was measured with mixing ratio between the neon gas and the argon gas being changed. Further, whether the surface light source device 100 is turned-on or off under the above-mentioned conditions was tested. The results are shown in the following Table 2.

**Table 2**

| Pressure (torr) | Mixing ratio between Ne: Ar | Turn-on at a temperature of 25°C | Turn-on at a temperature of 0°C | PWM dimming |
|---|---|---|---|---|
| 30 | 0: 100 | X | X | Unavailable |
| 30 | 20: 80 | X | X | Unavailable |
| 30 | 40: 60 | ○ | X | Unavailable (white discharge) |
| 30 | 60: 40 | ○ | ○ | 100-50% |
| 30 | 80: 20 | ○ | ○ | 100-20% |
| 30 | 97: 3 | ○ | ○ | 100-20% |
| 30 | 100: 0 | ○ | ○ | Unavailable (neon discharge) |

As shown in Table 2, when the pressure of the discharge gas is 30torr and the mixing ratios by weight between the neon gas and the argon gas are 100: 0, 97:3, 80:20, 60: 40 and 40:60, efficiency for lighting the discharge gas is improved.

According to the present invention, the discharge gas injected into the discharge spaces having an aspect ratio of about 0.07 to about 0.85 has a pressure of about 10torr to about 120torr corresponding to the temperature for lighting the discharge gas. Further, a mixing ratio by weight between the neon gas and the argon gas is about 100: 0 to about 40: 60. Thus, when the discharge gas including the inert gas having the above-mentioned composition ratio is injected into the discharge spaces, the surface light source device may have optimal light-emitting efficiency. As a result, plasma may be optimally generated in the discharge spaces so that the surface light source device may have improved light-emitting efficiency.

Having described the exemplary embodiments of the present invention and its advantages, it is noted that various changes, substitutions and alterations can be made herein without departing from the spirit and scope of the invention as defined by appended claims.

## Claims

1. A discharge gas injected into a discharge space of a surface light source device, the discharge space having an aspect ratio of about 0.07 to about 0.85, comprising an inert gas that includes a neon gas and an argon gas,
wherein the inert gas has a pressure of about 10torr to about 120torr with respect to a temperature for lighting the discharge gas, and a mixing ratio by weight between the neon gas and the argon gas is about 100: 0 to about 40: 60.

2. The discharge gas of claim 1, wherein the inert gas has a pressure of about 20torr to about 80torr and the mixing ratio by weight between the neon gas and the argon gas is about 97: 3 to about 40: 60, when the temperature for lighting the discharge gas is about 25°C.

3. The discharge gas of claim 1, wherein the inert gas has a pressure of about 10torr to about 40torr and the mixing ratio by weight between the neon gas and the argon gas is about 97: 3 to about 60: 40, when the temperature for lighting the discharge gas is about 0°C.

4. A surface light source device comprising:
a first substrate;
a second substrate attached to the first substrate to define a discharge space into which a discharge gas is injected, the discharge gas including a mercury gas and an inert gas; and
an electrode for applying a voltage to the discharge gas,
wherein the inert gas has a pressure of about 10torr to about 120torr with respect to a temperature for lighting the discharge gas, and a mixing ratio by weight between the neon gas and the argon gas is about 100: 0 to about 40: 60.

5. The surface light source device of claim 4, wherein the inert gas has a pressure of about 20torr to about 80torr and the mixing ratio by weight between the neon gas and the argon gas is about 97: 3 to about 40: 60, when the temperature for lighting the discharge gas is about 25°C.

6. The surface light source device gas of claim 4, wherein the inert gas has a pressure of about 10torr to about 40torr and the mixing ratio by weight between the neon gas and the argon gas is about 97: 3 to about 60: 40, when the temperature for lighting the discharge gas is about 0°C.

7. The surface light source device of claim 4, wherein the discharge space has an aspect ratio of about 0.07 to about 0.85.

8. The surface light source device of claim 4, wherein the discharge space has a width of about 6mm to about 14mm and a height of about 1 mm to about 5mm.

9. A backlight unit comprising:
a surface light source device including a first substrate, a second substrate attached to the first substrate to define a discharge space having an aspect ratio of about 0.07 to about 0.85, and an electrode for applying a voltage to a discharge gas including a mercury gas and an inert gas that is injected into the discharge space, wherein the inert gas has a pressure of about 10torr to about 120torr with respect to a temperature for lighting the discharge gas, and a mixing ratio by weight between the neon gas and the argon gas is about 100: 0 to about 40: 60;
a case for receiving the surface light source device;
an optical sheet interposed between the surface light source device and the case; and
an inverter for applying a discharge voltage to the electrode of the surface light source device.
